# EUROPEAN PATENT APPLICATION

(11) **EP 4 813 925 A1**
(43) Date of publication of application: **30.09.2026**
(21) Application number: 26166941.0
(22) Date of filing: 23.03.2026
(51) Int. Cl.: C01G 53/50, C01G 53/42

(54) **METHODS OF PREPARING POSITIVE ELECTRODE ACTIVE MATERIALS, POSITIVE ELECTRODE ACTIVE MATERIALS, AND RECHARGEABLE LITHIUM BATTERIES**

(30) Priority: 27.03.2025 KR 20250039460; 27.03.2025 KR 20250039492; 27.03.2025 KR 20250039494; 27.03.2025 KR 20250039495; 27.03.2025 KR 20250039499
(71) Applicant: SAMSUNG SDI CO., LTD., Yongin-si, Gyeonggi-do 17084 (KR)
(72) Inventor: KIM, Young-Ki, 17084 Yongin-si (KR); KANG, Seok Mun, 17084 Yongin-si (KR); YOON, Jaesang, 17084 Yongin-si (KR); KIM, Jihyeun, 17084 Yongin-si (KR); JEONG, Jaeyoung, 17084 Yongin-si (KR); KIM, Eugene, 17084 Yongin-si (KR); LEE, Soonrewl, 17084 Yongin-si (KR)
(74) Representative: Maiwald GmbH

(57) **Abstract**

A method for preparing a positive electrode active material includes preparing core particles including a lithium nickel-based composite oxide and mixing the core particles and water to wash the core particles. The method further includes removing a portion of the water so that the water is included in an amount of about 1 wt% to about 10 wt% based on a total 100 wt% of the core particles and water to obtain a washed product. The method also includes adding and mixing an aluminum raw material and a metal raw material into an aqueous solvent to prepare a coating solution. The method further includes adding the washed product into a mixer and performing heat treatment at about 300 °C to about 400 °C while or after spraying the coating solution. The metal raw material is a boron raw material or a tungsten raw material.

## Description

### BACKGROUND

### 1. Field

Methods of preparing positive electrode active materials, positive electrode active materials, and rechargeable lithium batteries are disclosed.

### 2. Description of the Related Art

Portable information devices such as cell phones, laptops, smart phones, and the like uses rechargeable lithium batteries. Electric vehicles use rechargeable lithium batteries having high energy density and easy portability as a driving power source. Research has been conducted in using rechargeable lithium batteries with high energy density as a driving power source or power storage power source for hybrid or electric vehicles.

Various positive electrode active materials have been investigated for rechargeable lithium batteries. Among these materials, a lithium nickel-based composite oxide, a lithium nickel manganese cobalt-based composite oxide, a lithium nickel cobalt aluminum-based composite oxide, and a lithium cobalt-based composite oxide are most often used as positive electrode active materials. Recently, with the increasing demand for large-sized, high-capacity, or high-energy-density rechargeable lithium batteries, there is a need to develop further positive electrode active materials that improve stability and performance of batteries.

### SUMMARY

A method of preparing a positive electrode active material including a lithium nickel-based composite oxide is provided, wherein the performance of a rechargeable lithium battery at high temperature and high voltage is improved, and capacity characteristics, initial charge/discharge efficiency, and high-temperature cycle-life characteristics of the battery are improved by an optimal coating layer.

In some embodiments, a method of preparing a positive electrode active material includes: (i) preparing core particles including a lithium nickel-based composite oxide; (ii) mixing the core particles and water to wash the core particles; (iii) removing a portion of the water so that the water is included in an amount of about 1 wt% to about 10 wt% based on a total 100 wt% of the core particles and water to obtain a washed product; (iv) adding and mixing an aluminum raw material and a metal raw material into an aqueous solvent to prepare a coating solution; and (v) adding the washed product into a mixer and performing heat treatment at about 300 °C to about 400 °C while or after spraying the coating solution, wherein the metal raw material is a boron raw material or a tungsten raw material.

In some embodiments, a positive electrode active material is provided by the method of preparing the positive electrode active material.

In some embodiments, a rechargeable lithium battery includes a positive electrode including the positive electrode active material; a negative electrode; and an electrolyte.

According to the method of preparing the positive electrode active material according to some embodiments, a coating layer may be introduced onto the surface of a positive electrode active material by a simple and efficient process, and a rechargeable lithium battery including the positive electrode active material made by the method of preparing the positive electrode active material may exhibit high initial charge/discharge capacity and efficiency and may have long cycle-life characteristics.

### BRIEF DESCRIPTION OF THE DRAWINGS

FIG.1 shows a cylindrical rechargeable lithium battery.
FIG. 2 is a cross-sectional view of a prismatic rechargeable lithium battery.
FIGS. 3 and 4 are perspective views of a pouch-type rechargeable lithium battery.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

As used herein, "layer" herein includes not only a shape formed on the whole surface when viewed from a plan view, but also a shape formed on a partial surface.

An average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter means a diameter (D₅₀) of particles having a cumulative volume of 50 vol% in the particle size distribution that is obtained by measuring the size (diameter or major axis length) of 20 particles at random in a scanning electron microscope image. The volume of a particle is calculated using the value read from the scanning electron microscope image on basis of the assumption that the particles have a spherical shape.

Herein, "or" is not to be construed as an exclusive meaning, for example, "A or B" is construed to include A, B, A+B, and the like.

Herein, "metal" includes ordinary metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements of groups 1 and 2 excluding H (but including Be) are regarded as representing metals.

### Method of Preparing Positive Electrode Active Material

In some example embodiments, a method of preparing a positive electrode active material includes: (i) preparing core particles including a lithium nickel-based composite oxide; (ii) mixing the core particles and water to wash the core particles; (iii) removing a portion of the water so that the water is included in an amount of about 1 wt% to about 10 wt% based on a total 100 wt% of the core particles and water to obtain a washed product; (iv) adding and mixing an aluminum raw material and a raw metal material into an aqueous solvent to prepare a coating solution; and (v) adding the washed product into a mixer and performing heat treatment at about 300 °C to about 400 °C while or after spraying the coating solution, wherein the metal raw material is a boron raw material or a tungsten raw material.

The method improves high-voltage and high-temperature cycle-life characteristics and also initial charge/discharge efficiency by including coating layers containing aluminum and boron or tungsten on the surfaces of core particles containing a lithium nickel-based composite oxide, thereby strengthen the particle surfaces and having a coating layer with a structural 3D lithium channel.

In the preparing of the core particles containing lithium nickel-based composite oxide, a first heat treatment is performed. Because of the problem of high residual lithium on the surfaces of the core particles after the first heat treatment, a washing process may be required, and a drying process is performed after the washing process. Additionally, because a second heat treatment is then performed after the drying process, there are problems of increased processing costs and reduced production volume. But, according to the method of preparing the positive electrode active material according to embodiments of the present disclosure, the drying process and second heat treatment after the washing process are performed as a single process rather than as separate steps, thereby reducing processing costs. In addition, by spraying aluminum and metal (boron or tungsten) dissolved in a solvent during mixing after the washing process, the surface of the positive electrode active material may be coated more effectively than with the existing coating method, and the coating may be performed uniformly while reducing processing costs by performing the drying process simultaneously with the coating.

In the method of preparing a positive electrode active material according to embodiments, the preparation of core particles including the lithium nickel-based composite oxide may include mixing a nickel-based composite hydroxide and a lithium raw material and performing a first heat treatment. The nickel-based composite hydroxide is a precursor of the core particles, and the nickel-based composite hydroxide may be prepared by a general co-precipitation method.

In the nickel-based composite hydroxide, an amount of nickel based on 100 mol% of a total metal may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, about 60 mol% to about 75 mol%, about 80 mol% to about 99 mol%, about 82 mol% to about 95 mol%, about 85 mol% to about 95 mol%, about 87 mol% to about 93 mol%, about 88 mol% to about 92 mol%, or about 90 mol% to about 95 mol%. When the amount of nickel is in these ranges, a high capacity battery with the positive electrode active material may be achieved

If the nickel-based composite hydroxide further contains aluminum, the amount of aluminum based on 100 mol% of a total metal in the nickel-based composite hydroxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, or about 1 mol% to about 2 mol%. When the amount of aluminum in the composite hydroxide is in these ranges, the structural stability of the positive electrode active material may be improved while providing high capacity, and the production cost may be lowered.

A method of preparing a positive electrode active material according to some embodiments may use a nickel-aluminum-based composite hydroxide as a precursor in which aluminum is evenly dispersed within the structure by using a aluminum raw material during the preparation of the precursor without additionally doping aluminum during the preparing of the core particles. If such precursors are used, a positive electrode active material may be prepared in which the layered structure is maintained even after repeated charging and discharging, and because aluminum byproducts or aluminum agglomerates are not formed, the capacity, efficiency characteristics, and cycle-life characteristics of the positive electrode active material may be improved.

In the nickel-based composite hydroxide, an amount of cobalt based on 100 mol% of a total metal may be less than or equal to about 0.01 mol%, less than or equal to about 0.005 mol%, or less than or equal to about 0.001 mol%, for example 0 mol% to about 0.01 mol%, 0 mol% to about 0.005 mol%, or 0 mol% to about 0.001 mol%. The nickel-based composite hydroxide is made more economical because of the reduced amount of cobalt, and the nickel-based composite hydroxide maximizes capacity and improves structural stability.

In some examples, the nickel-based composite hydroxide may be represented by Chemical Formula 1:

[Chemical Formula 1] Niₓ₁M¹_{y1}M²_{z1}(OH)₂

In Chemical Formula 1, 0.3≤x1≤1, 0≤y1≤0.7, 0≤z1≤0.7, and 0.9≤x1+y1+z1≤1.1, M¹ and M² may be different elements and may each independently be one or more of Al, B, Ba, Ca, Ce, Co, Cr, Cu, Fe, Mg, Mn, Mo, Nb, Si, Sn, Sr, Ti, V, W, Y, Zn, and Zr, and M¹ and M² may be different from each other. In further embodiments with Chemical Formula 1, 0.6≤x1≤1, 0≤y1≤0.4, and 0≤z1≤0.4; or 0.8≤x1≤1, 0≤y1≤0.2, and 0≤z1≤0.2; or 0.9≤x1<1, 0<y1 ≤0.1, and 0≤z1≤0.1.

In further examples, the nickel-based composite hydroxide may be represented by Chemical Formula 2:

[Chemical Formula 2] Niₓ₂Mn_{y2}Al_{z2}M³_{w2}(OH)₂

In Chemical Formula 2, 0.6≤x2≤0.8, 0.1≤y2≤0.4, 0≤z2≤0.03, 0≤w2≤0.3, and 0.9≤x2+y2+z2+w2≤1.1, and M³ is one or more of B, Ba, Ca, Ce, Cr, Fe, Mg, Mo, Nb, Si, Sn, Sr, Ti, V, W, Y, Zr, and Zn. In further embodiments of Chemical Formula 2, 0.6≤x2≤0.8, 0.1≤y2≤0.39, 0.01≤z2≤0.03, 0≤w2≤0.29.

The nickel-based composite hydroxide may be in the form of particles, and the average particle diameter (D₅₀) of the particles may be about 8 µm to about 15 µm, for example about 9 µm to about 14 µm, about 10 µm to about 13 µm, about 2 µm to about 5 µm, about 3 µm to about 5 µm, or about 3.5 µm to about 4.5 µm.

The nickel-based composite hydroxide and raw lithium material may be mixed in a molar ratio of about 1:0.9 to about 1:1.8, for example about 1:0.9 to about 1:1.5, or about 1:1 to about 1:1.2.

The first heat treatment may be performed, for example, in an oxygen atmosphere at a temperature range of about 750 °C to about 950 °C, about 780 °C to about 900 °C, or about 810 °C to about 890 °C. The first heat treatment may be performed for about 2 hours to about 20 hours, or about 4 hours to about 12 hours.

The lithium nickel-based composite oxide may be obtained by the first heat treatment. In the lithium nickel-based composite oxide, an amount of nickel based on 100 mol% of a total metal excluding lithium may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, about 60 mol% to about 75 mol%, about 80 mol% to about 99 mol%, about 82 mol% to about 95 mol%, about 85 mol% to about 95 mol%, about 87 mol% to about 93 mol%, about 88 mol% to about 92 mol%, or about 90 mol% to about 95 mol%. When the amount of nickel is in these ranges, high capacity may be achieved

The nickel is included in the core particles, but may migrate to the coating layers during the coating process. Thus, the amount of nickel may refer to an amount of nickel included in the entire positive electrode active material.

The lithium nickel-based composite oxide may be, for example, a lithium nickel-cobalt-aluminum-based composite oxide that further includes aluminum in addition to nickel and cobalt. Aluminum may make the lithium nickel-based composite oxide more structurally stable. In the lithium nickel-based composite oxide, an amount of aluminum based on 100 mol% of a total metal excluding lithium may be greater than or equal to about 0.1 mol%, greater than or equal to about 0.5 mol%, or greater than or equal to about 1 mol%, for example, about 1 mol% to about 3 mol%, about 1 mol% to about 2.5 mol%, or about 1 mol% to about 2 mol%. Here, the amount of aluminum refers to an amount of aluminum present in the core particles. If the amount of aluminum is in the above ranges, a stable structure may be maintained, the problem of the structure collapsing due to charging and discharging may be suppressed, and the long cycle-life characteristics of the positive electrode active material may be realized.

In some embodiments, the concentration of aluminum within the core particles may be uniform. In other words, there is no concentration gradient of aluminum from the centers to the surfaces of the core particles, or that the aluminum concentration in the outer portion of the core particles is neither higher nor lower than in the internal portions, and that the aluminum within the core particles is evenly distributed. Such structures may be obtained by using aluminum raw materials during preparation of the precursor without additional doping of aluminum during the synthesis process of the core particles. The core particles may be in a form of secondary particles that are agglomerations of primary particles, and the amount of aluminum inside the primary particles may be the same or similar regardless of the location of the primary particles. That is, if a primary particle is selected at an arbitrary location in the cross-section of a secondary particle and the aluminum content is measured at the interior of the primary particle rather than at the interface, the aluminum content may be the same/similar/uniform regardless of the location of the primary particle, that is, whether the primary particle is close to the center or surface of the secondary particle. In such a structure, a stable layered structure may be maintained even with little or no cobalt, and aluminum byproducts or aluminum agglomerates are not generated such that the capacity, efficiency, and cycle-life characteristics of the positive electrode active material may be improved.

In further examples, the lithium nickel-based composite oxide may be represented by Chemical Formula 3:

[Chemical Formula 3] Liₐ₃Niₓ₃M⁴_{y3}M⁵_{z3}O_{2-b3}X_{b3}

In Chemical Formula 3, 0.9≤a3≤1.8, 0.3≤x3≤1, 0≤y3≤0.7, 0≤z3≤0.7, 0.9≤x3+y3+z3≤1.1, and 0≤b3≤0.1, M⁴ and M⁵ may each independently be one or more of Al, B, Ba, Ca, Ce, Co, Cr, Cu, Fe, Mg, Mn, Mo, Nb, Si, Sn, Sr, Ti, V, W, Y, Zn, and Zr, M⁴ and M⁵ may be different elements from each other, and X is one or more of F, P, and S. In further embodiments of Chemical Formula 3, 0.6≤x3≤1, 0≤y3≤0.4, and 0≤z3≤0.4; or 0.8≤x3≤1, 0≤y3≤0.2, and 0≤z3≤0.2; or 0.9≤x3<1, 0<y3≤0.1, and 0≤z3≤0.1.

In other embodiments, the lithium nickel-based composite oxide may be represented by Chemical Formula 4:

[Chemical Formula 4] Liₐ₄Niₓ₄Mn_{y4}Al_{z4}M⁶_{w4}O_{2-b4}X_{b4}

In Chemical Formula 4, 0.9≤a4≤1.8, 0.6≤x4≤0.8, 0.1≤y4≤0.4, 0≤z4≤0.03, 0≤w4≤0.3, 0.9≤x4+y4+z4+w4≤1.1, and 0≤b4≤0.1, M⁶ is one or more of B, Ba, Ca, Ce, Cr, Fe, Mg, Mo, Nb, Si, Sn, Sr, Ti, V, W, Y, Zr, and Zn, and X is one or more of F, P, and S. In further embodiments with Chemical Formula 4, 0.9≤a4≤1.5, or 0.9≤a4≤1.2. Additionally, Chemical Formula 4 may contain aluminum, in which case 0.6≤x4≤0.8, 0.1≤y4≤0.39, 0.01≤z4≤0.03, and 0≤w4≤0.29. In still further embodiments with Chemical Formula 4 that contain aluminum, 0.6≤x4≤0.79, 0.6≤x4≤0.78, 0.6≤x4≤0.75, 0.65≤x4≤0.8, or 0.7≤x4≤0.79; 0.1≤y4≤0.35, 0.1≤y4≤0.30, 0.1≤y4≤0.29, 0.15≤y4≤0.39, or 0.2≤y4≤0.3; 0.01≤z4≤0.025, 0.01<z4≤0.02, or 0.01<z4≤0.019; 0≤w4≤0.28, 0≤w4≤0.27, 0≤w4≤0.26, 0≤w4≤0.25, 0≤w4≤0.24, 0≤w4≤0.23, 0≤w4≤0.22, 0≤w4≤0.21, 0≤w4≤0.2, 0≤w4≤0.15, 0≤w4≤0.1, or 0≤w4≤0.09.

The lithium nickel-based composite oxide may be, for example, a cobalt-free compound that does not contain cobalt or contains a very small amount of cobalt. An amount of cobalt based on 100 mol% of a total metal excluding lithium may be less than or equal to about 0.01 mol%, less than or equal to about 0.005 mol%, or less than or equal to about 0.001 mol%, for example, 0 mol% to about 0.01 mol%, 0 mol% to about 0.005 mol%, or 0 mol% to about 0.001 mol%. The lithium nickel-based composite oxide is more economical because of the little or no cobalt, and capacity and structural stability are improved.

The core particles may be in a form of secondary particles that are agglomerations of primary particles. The secondary particles may be spherical, ellipsoidal, polyhedral, or irregularly shaped, and the primary particles may be spherical, ellipsoidal, plate-shaped, or a combination thereof. The average particle diameter (D₅₀) of the secondary particles may be about 8 µm to about 15 µm, for example, about 9 µm to about 14 µm, or about 10 µm to about 13 µm. By using core particles in the form of secondary particles, the density of the final positive electrode active material may be increased and the capacity, charge/discharge efficiency, rate capability, and power characteristics may be improved.

The core particles may be in a form of single particles. The single particles exist alone without a grain boundary within the particle, be composed of one particle, and may be a single particle, a monolith structure, a one body structure, or a non-agglomerated particle, in which particles are not agglomerated with each other but exist as an independent phase in terms of morphology. The single particles may be expressed as a single particle (one body particle, single grain), for example, as a single crystal. The single particles may exist alone or may be attached together. For example, 2 to 10 single particles may be attached to and in contact with each other.

The average particle diameter (D₅₀) of the core particles may be about 2 µm to about 5 µm, for example, about 3 µm to about 5 µm, or about 3.5 µm to about 4.5 µm. According to some embodiments, a lithium nickel-based composite oxide having an amount of nickel greater than or equal to about 60 mol% based on 100 mol% of a total metal excluding lithium has a significantly different amount of residual lithium on the particle surfaces and different characteristics of the surface from oxides of other compositions, making it impossible to form good coating layers in the form of uniform films using a conventional coating method. In some embodiments, a method is proposed to uniformly coat the particle surfaces of a lithium nickel-based composite oxide.

In the washing of the core particles by mixing the core particles and water (e.g., distilled water) according to some embodiments, the core particles and the water may be mixed in a weight ratio of about 0.5:1 to about 1:1 to wash the core particles, for example, the core particles may be mixed with water in a weight ratio of about 0.6:1 to about 1:1, or about 0.7:1 to about 0.9:1 to wash the core particles. Additionally, the mixing of the core particles and the water to wash the core particles may be performed for about 1 minute to about 30 minutes, for example, the washing may be performed for about 1 minute to about 10 minutes. In the preparing of the core particles including the lithium nickel-based composite oxide with the washing process, the lithium remaining after the first heat treatment may be removed. If the conditions such as the weight ratio of the core particles and the water, the washing time, etc. are satisfied, the residual lithium on the surfaces of the core particles including the lithium nickel-based composite oxide may be effectively removed, while the problem of lithium inside the core particles being eluted and thereby reducing the capacity may be suppressed.

In the obtaining of the washed product by removing a portion of the water according to some embodiments, a portion of the water may be removed so that the water is included in an amount of about 1 wt% to about 10 wt% based on a total 100 wt% of the core particles and water. For example, a portion of the water may be removed so that the water is included in an amount of about 5 wt% to about 10 wt%, or about 5 wt% to about 7 wt% based on a total 100 wt% of the core particles and water. By removing a portion of the water in this way, a washed product may be obtained, and the washed product may include about 90 wt% to about 99 wt% of core particles and about 1 wt% to about 10 wt% of water, or about 90 wt% to about 95 wt% of core particles and about 5 wt% to about 10 wt% of water, or about 93 to about 95 wt% of core particles and about 5 wt% to about 7 wt% of water. When the washed product includes water within these ranges, the mixing of the positive electrode active materials is smooth in the subsequent drying process, and the metal is dissolved in the remaining washing water, so that a uniform coating may be achieved.

In the adding and the mixing of the aluminum raw material and the metal raw material with the aqueous solvent to prepare the coating solution, the aqueous solvent may be distilled water, an alcohol-based solvent, or a combination thereof. The aluminum raw material may be aluminum sulfate, aluminum sulfate hydrate, aluminum nitrate, aluminum nitrate hydrate, or a combination thereof. Aluminum nitrate hydrate may form uniform aluminum coating layers on the surfaces of core particles. The metal raw material may be a boron raw material or a tungsten raw material. The boron raw material may be boronic acid (H₃BO₃), boron sulfate, boron nitride, or a combination thereof. Boronic acid may form a uniform boron coating layer on lithium nickel-based composite oxide. The tungsten raw material may be a tungsten organic material, and for example, may be ammonium metatungstate hydrate (H₂₆N₆O₄₀W₁₂-H₂O). Ammonium metatungstate hydrate may form a uniform tungsten coating layer on the surface of a layered lithium nickel-based composite oxide after drying with the organic portion removed.

Based on 100 mol% of the total metal excluding lithium in the core particles and aluminum of the aluminum raw material, an amount of aluminum of the raw aluminum material may be about 0.1 mol% to about 1.0 mol%, for example, about 0.1 mol% to about 0.5 mol%, about 0.2 mol% to about 0.5 mol%, or about 0.2 mol% to about 0.3 mol%. With this amount of aluminum, a coating layer having a uniform, thin thickness of several nanometers to several hundred nanometers can be formed. Such a coating layer may reduce the amount of gas generated from a rechargeable lithium battery under high-voltage or high-temperature driving conditions and improve high capacity and long cycle-life characteristics of the battery.

Based on 100 mol% of the total metal excluding lithium in the core particles and boron of the boron raw material, an amount of boron in the raw boron material may be about 0.1 mol% to about 3.0 mol%, for example, about 0.1 mol% to about 2.0 mol%, about 0.1 mol% to about 1.0 mol%, about 0.2 mol% to about 1.0 mol%, about 0.2 mol% to about 0.6 mol%, about 0.4 mol% to about 1.0 mol%, about 0.4 mol% to about 0.8 mol%, about 0.8 mol% to about 1.2 mol%, about 0.6 mol% to about 0.8 mol%, or about 0.4 mol% to about 0.6 mol%. With this amount of boron, a coating layer having a uniform, thin thickness of several nanometers to several hundred nanometers can be formed. Such a coating layer may reduce the amount of gas generated from a rechargeable lithium battery under high-voltage or high-temperature driving conditions and improve high capacity and long cycle-life characteristics.

Based on a total of 100 mol% of the metal excluding lithium in the core particles and tungsten of the tungsten raw material, an amount of tungsten in the tungsten raw material may be about 0.01 mol% to about 0.5 mol%, for example about 0.01 mol% to about 0.2 mol%, about 0.02 mol% to about 0.2 mol%, about 0.02 mol% to about 0.15 mol%, about 0.05 mol% to about 0.15 mol%, about 0.05 mol% to about 0.1 mol%, about 0.1 mol% to about 0.15 mol%, about 0.01 mol% to about 0.05 mol%, about 0.02 mol% to about 0.05 mol%, about 0.02 mol% to about 0.04 mol%, about 0.01 mol% to about 0.04 mol%, about 0.01 mol% to about 0.03 mol%, or about 0.02 mol% to about 0.03 mol%. With this amount of tungsten, a coating layer having a uniform, thin thickness of several nanometers to several hundred nanometers can be formed. Such a coating layer reduces the amount of gas generated from a rechargeable lithium battery under high-voltage or high-temperature driving conditions and improve high capacity and long cycle-life characteristics.

After adding the aluminum raw material and the metal raw material to the aqueous solvent, the stirring time may be about 1 minute to about 60 minutes, for example, about 3 minutes to about 30 minutes, or about 5 minutes to about 10 minutes. The mixing speed may be about 2 RPM to about 20 RPM, for example about 3 RPM to about 15 RPM, or about 3 RPM to about 10 RPM. With these mixing conditions, the aluminum raw material and the metal raw material may be completely dissolved in the aqueous solvent, thereby effectively forming the uniform coating layer.

After adding the aluminum raw material and the metal raw material to the aqueous solvent and the mixing is stopped, the coating solution may have a supernatant in a pH range of about 2.5 to about 6.0, for example, about 3.0 to about 5.5, or about 3.0 to about 4.5. If the supernatant has pH of less than about 2.5, the supernatant may be too acidic and not form a uniform coating layer. If pH is greater than about 6.0, the supernatant may be too basic and it may be difficult to form a uniform coating layer.

In the method of preparing a positive electrode active material according to some embodiments, a washed product including about 1 wt% to about 10 wt% of water based on a total 100 wt% of the core particles and water is put into a mixer and the coating solution is sprayed. In this process, drying of the washed product and coating of the positive electrode active material may be performed simultaneously, thereby simplifying the process, reducing processing costs, and increasing production volume. In addition, as the coating solution including the aluminum raw material and the metal raw material is sprayed onto the washed product containing about 1 wt% to about 10 wt% of the water, the aluminum raw material and metal raw material may be partially dissolved in the remaining washing water, thereby uniformly forming a very thin coating layer on the surface of the positive electrode active material. Accordingly, the prepared positive electrode active material may have excellent capacity characteristics and cycle-life characteristics. The mixer may be suitable equipment for drying the washed product containing about 1 wt% to about 10 wt% of the water and be capable of providing appropriate heat treatment for uniformly coating the surface of the positive electrode active material.

Unlike a wet pre-addition method in which the salt as a coating raw material is first completely dissolved and then the core particles are added, a wet post-addition method in which the core particles are added and then the salt as a coating raw material are added, and the dry method in which the powder-type core particles and the powder-type raw coating material are mixed and are subjected to heat treatment, in embodiments, conditions are applied for forming a uniform coating layer on the core particles including a lithium nickel-based composite oxide by washing the core particles using an aqueous solvent to reduce the residual lithium content on the surface and then proceeding with the coating by spraying the coating raw material.

In the method of preparing a positive electrode active material according to some embodiments, the washed product may be added to the mixer at about 50 RPM or less, for example, at about 20 RPM or less. A mixer that mixes at a speed of less than or equal to about 50 RPM may be, for example, a Lödige mixer. If the speed of the mixer exceeds 50 RPM, the positive electrode active material inside the mixer may not be smoothly mixed due to moisture. Therefore, when the speed of the mixer is within this range, the positive electrode active material inside the mixer may be mixed smoothly, and drying and coating of the washed product may be performed simultaneously.

The washed product put into the mixer may include about 1 wt% to about 10 wt% of water based on 100 wt% of the total core particles and water. For example, the washed product may include about 5 wt% to about 10 wt% of washing water, or about 5 wt% to about 7 wt% of washing water based on 100 wt% of the total core particles and washing water. If the washed product includes the water within these ranges, the mixing of the positive electrode active materials is smooth in the subsequent drying process and the metal is dissolved in the remaining water so that the coating is uniform.

In the method of preparing a positive electrode active material according to some embodiments, spraying the coating solution in the mixer that is rotating at about 50 RPM or less may be performed for about 1 minute to about 10 minutes. In addition, the spraying of the coating solution may be performed at the start of the mixer heating up, wherein the mixer temperature may be at about 20 °C to about 80 °C, with the mixer temperature after spraying the coating solution being about 300 °C to about 400 °C. When the coating solution is sprayed under these conditions, the core particle surfaces may be more effectively coated than the conventional dry and wet coating methods. Further, the coating is simultaneously performed with a drying process, which reduces a processing cost and achieves uniform coating.

A method of preparing a positive electrode active material according to some embodiments may include introducing the washed product into a mixer that mixes at a speed of less than or equal to about 50 RPM, spraying the coating solution, and performing heat treatment at about 300 °C to about 400 °C, for example, performing heat treatment at about 350 °C to about 390 °C. Typically, a drying process is performed at about 200 °C after the washing process, and a second heat treatment is performed at about 800°C after the drying process. However, according to a method of preparing a positive electrode active material according to some embodiments, the drying process and the second heat treatment are not performed as separate processes, but rather as a single process, thereby reducing processing costs and enabling uniform coating.

### Positive Electrode Active Material

In embodiments of the present disclosure, a positive electrode active material prepared according to the method of preparing the positive electrode active material is provided. By introducing a coating layer containing a specific metal content on the surfaces of core particles including lithium nickel-based composite oxide, it is possible to maintain a stable structure in a battery even at high voltage, implement high capacity and long cycle-life characteristics in the battery, and improve high-temperature storage characteristics of the battery.

### Core Particles

The core particles include a lithium nickel-based composite oxide, and the lithium nickel-based composite oxide may be represented by Chemical Formula 3 or Chemical Formula 4 above.

The core particles may be easily chemically attacked by components in an electrolyte when the battery is operated under high-voltage or high-temperature conditions, which may in turn cause side reactions with the electrolyte and thereby generate a large amount of gas. This may result in deteriorated cycle-life and safety. But these problems may be solved by providing the coating layer according to the present disclosure.

### Coating Layer

The positive electrode active material according to embodiments of the present disclosure includes coating layers disposed on the surfaces of the core particles, with the coating layers including aluminum and another metal. The other metal may be boron or tungsten.

As measured by inductively coupled plasma (ICP) spectroscopy analysis, an amount of aluminum in the coating layer based on 100 mol% of the total metal excluding lithium in the positive electrode active material may be about 0.1 mol% to about 1.0 mol%, for example, about 0.1 mol% to about 0.5 mol%, about 0.2 mol% to about 0.5 mol%, or about 0.2 mol% to about 0.3 mol%. With the amount of aluminum being in these ranges, the positive electrode active material may provide for a battery having excellent capacity characteristics and cycle-life characteristics by including the aluminum at a high concentration and with a thin thickness on the surface of the positive electrode active material.

ICP-AES (ICP 5300DV, PerkinElmer) may be used as an ICP spectroscopy instrument, and analysis may be performed under the following conditions: forward power 1300 W; torch height 15 mm; plasma gas flow 15.00 L/min; sample gas flow 0.8 L/min; auxiliary gas flow 0.20 L/min, and pump speed 1.5 ml/min.

As measured by inductively coupled plasma (ICP) spectroscopy analysis, the amount of boron in the coating layer based on 100 mol% of the total metal excluding lithium in the positive electrode active material may be about 0.1 mol% to about 3.0 mol%, for example, about 0.1 mol% to about 2.0 mol%, about 0.1 mol% to about 1.0 mol%, about 0.2 mol% to about 1.0 mol%, about 0.2 mol% to about 0.6 mol%, about 0.4 mol% to about 1.0 mol%, about 0.4 mol% to about 0.8 mol%, about 0.8 mol% to about 1.2 mol%, about 0.6 mol% to about 0.8 mol%, or about 0.4 mol% to about 0.6 mol%. If the amount of boron is in these ranges, the positive electrode active material may provide for a battery having excellent capacity characteristics and cycle-life characteristics by including boron at a high concentration and with a thin thickness on the surface of the positive electrode active material.

As measured by inductively coupled plasma (ICP) spectroscopy analysis for the positive electrode active material, the amount of tungsten in the coating layer based on 100 mol% of the total metal excluding lithium in the positive electrode active material may be about 0.01 mol% to about 0.2 mol%, about 0.02 mol% to about 0.2 mol%, about 0.02 mol% to about 0.15 mol%, about 0.05 mol% to about 0.15 mol%, about 0.05 mol% to about 0.1 mol%, about 0.1 mol% to about 0.15 mol%, about 0.01 mol% to about 0.05 mol%, about 0.02 mol% to about 0.05 mol%, about 0.02 mol% to about 0.04 mol%, about 0.01 mol% to about 0.04 mol%, about 0.01 mol% to about 0.03 mol%, or about 0.02 mol% to about 0.03 mol%. When the amount of tungsten is in these ranges, the positive electrode active material may provide for a battery having excellent capacity characteristics and cycle-life characteristics by including tungsten at a high concentration and with a thin thickness on the surface of the positive electrode active material.

The coating layer may be in the form of a film that continuously surrounds the surfaces of the core particles, or it may be in the form of a shell that surrounds the entire surfaces of the core particles. Such configurations are distinct from a structure in which only portions of the surfaces of the core particles are coated. According to some embodiments, the coating layer may be formed in a form that completely covers the surface of the core particles while being very thin and uniform, whereby the positive electrode active material has improved structural stability without increased resistance or decreased capacity. Such a configuration effectively suppressing side reactions with the electrolyte, reduces gas generation under high voltage and high temperature conditions, and implements long cycle-life characteristics.

The coating layer according to some embodiments may have a thickness of about 5 nm to about 200 nm, for example, about 5 nm to about 150 nm, about 5 nm to about 100 nm, about 5 nm to about 80 nm, about 5 nm to about 50 nm, or about 10 nm to about 50 nm. If the coating layer is in these thickness ranges, the structural stability of the positive electrode active material may be improved without increasing resistance or reducing capacity, and side reactions with the electrolyte may be effectively suppressed. The thickness of the coating layer may be measured, for example, by SEM (scanning electron microscope), TEM (transmission electron microscope), TOF-SIMS (time-of-flight secondary ion mass spectrometry), XPS (X-ray photoelectron spectroscopy), or EDS (energy-dispersive X-ray spectroscopy) analysis, and for example, by EDS line profile analysis of a cross-section of the positive electrode active material.

The coating layer may further contain nickel, cobalt, or a combination thereof. The nickel and/or cobalt may be contained in the core particles and introduced during the coating layer formation process, and the nickel and/or cobalt contents are not particularly limited. According to some example embodiments, a coating layer contains nickel and/or cobalt, at a thin and uniform thickness, thereby improving the high-voltage characteristics of the positive electrode active material and enhancing cycle-life characteristics.

The positive electrode active material may include core particles including a lithium nickel-based composite oxide, with coating layers provided on the surfaces of the core particles and including aluminum oxide, lithium-aluminum oxide, boron oxide, lithium-boron oxide, tungsten oxide, lithium-tungsten oxide, or a combination thereof.

### Positive Electrode

In some embodiments, a positive electrode includes a positive electrode current collector and a positive electrode active material layer on the current collector, wherein the positive electrode active material layer includes the positive electrode active material as described above. The positive electrode active material layer may further include other types of positive electrode active materials in addition to the aforementioned positive electrode active materials. For example, the positive electrode active material layer may optionally further include a binder, a conductive material, or a combination thereof.

### Binder

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

### Conductive Material

The conductive material is included to provide electrode conductivity and any electrically conductive material may be used that does not cause an undesirable chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amounts of the binder and the conductive material may be about 0.5 wt% to about 5 wt% based on 100 wt% of the positive electrode active material layer.

The positive electrode current collector may include an aluminum thin film, but is not limited thereto.

### Rechargeable Lithium Battery

Embodiments of the present disclosure provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

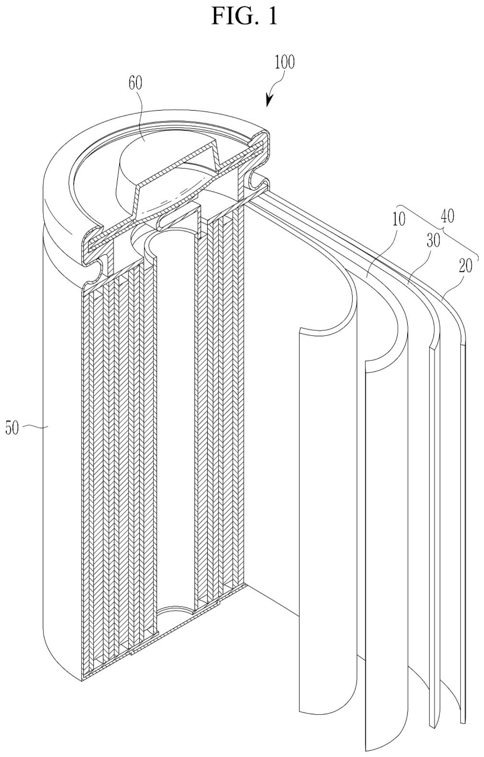

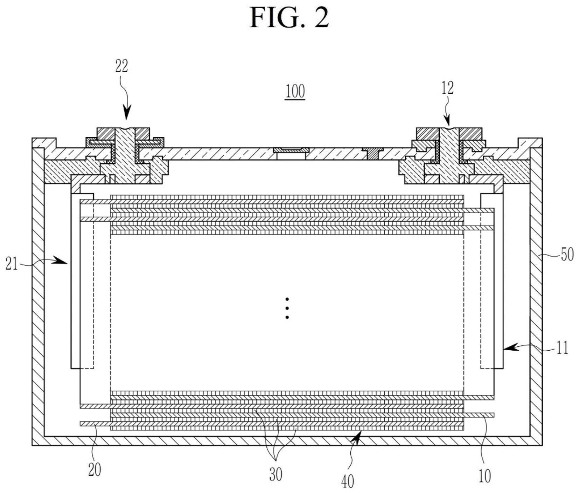

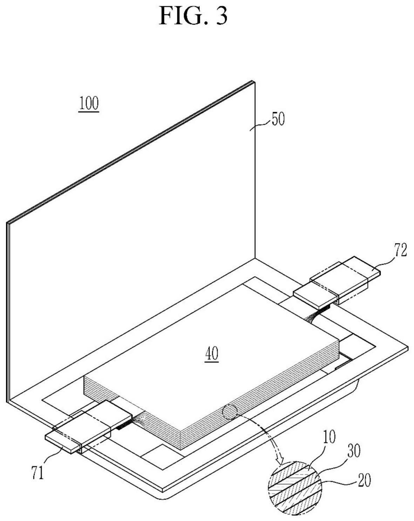

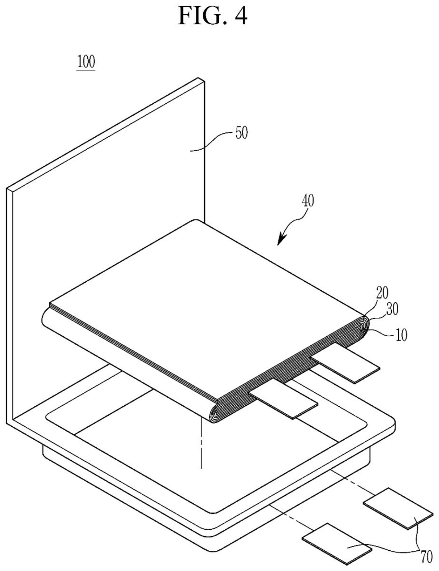

The rechargeable lithium battery may be cylindrical, prismatic, pouch, coin, etc. depending on its shape. FIGS. 1 to 4 are schematic views of rechargeable lithium batteries according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40.

### Negative Electrode

The negative electrode may include a current collector and a negative electrode active material layer on the current collector. The negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material.

**The Si-based** negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles with amorphous carbon coated on the surfaces of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including **crystalline** carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, based on 100 wt% of the silicon-carbon composite, an amount of silicon may be about 10 wt% to about 50 wt% and an amount of amorphous carbon may be about 50 wt% to about 90 wt%. In addition, based on 100 wt% of the silicon-carbon composite, when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a diameter of particle where a cumulative volume is about 50 vol% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used that does not cause an undesirable chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Based on 100 wt% of the negative electrode active material layer, an amount of the negative electrode active material may be about 95 wt% to about 99.5 wt%, and an amount of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and the negative electrode current collector may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types. When two or more types are used in a mixture, a mixing ratio can be adjusted according to the desired battery performance, as is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life. Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### 1. Preparation of Positive Electrode Active Material

Ni_{0.91}Co_{0.08}Al_{0.01}(OH)₂ with an average particle diameter (D₅₀) of about 14 µm and LiOH were mixed in a molar ratio of 1:1 and were subjected to first heat treatment at 800 °C for 15 hours under an oxygen atmosphere to prepare core particles containing lithium nickel-based composite oxide having a composition of LiNi_{0.91}Co_{0.08}Al_{0.01}O₂ in the form of secondary particles with an average particle diameter (D₅₀) of about 14 µm.

Two tons of the core particles were poured with two tons of distilled water (washing water) into a 10000 L mixer (Lödige) and then stirred for about 5 minutes to prepare a first mixed solution. Subsequently, the first mixed solution was press-filtered to remove the water until the water was reduced to 10 wt% based on 100 wt% of a total of the core particles and the water to thereby obtain a washed product.

A second mixed solution was prepared by adding distilled water, aluminum nitrate hydrate (Al(NO₃)₃-9H₂O), and boronic acid (H₃BO₃) to a 20 L reactor and stirring the mixture for about 30 minutes. The distilled water was added in an amount of 5 wt% based on total 100 wt% of a finally prepared positive electrode active material, the aluminum nitrate hydrate was added so that an aluminum amount was 0.3 mol% based on 100 mol% of a total metal excluding lithium of the finally prepared positive electrode active material, and the boronic acid was added so that a boron amount was 0.25 mol% based on 100 mol% of the total metal excluding lithium of the finally prepared positive electrode active material.

After putting the washed product into the mixer (Lödige), while mixing at 5 RPM and increasing the mixer temperature at 2.5 °C/min, the second mixed solution was sprayed inside the mixer within a temperature range of about 60°C for 7 minutes. After stopping the spraying, the temperature was continuously increased to 380 °C to simultaneously perform a heat treatment (drying and coating) for 5 hours in total and thereby prepare the positive electrode active material.

### 2. Manufacturing of Coin-type Half-cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminum foil current collector and then dried and compressed to make a positive electrode.

The positive electrode was used with a lithium metal counter electrode and an electrolyte solution to make a coin-type half-cell according to a conventional method. The electrolyte solution was prepared by mixing ethylene carbonate and dimethyl carbonate in a volume ratio of 3:7 and dissolving 1 M LiPF₆ in the mixed solvent. A polytetrafluoroethylene separator was used in the half-cell.

### Example 2

A positive electrode active material and a coin-type half-cell were made in the same manner as in Example 1 except that the amount of boron in the boronic acid was changed to 0.5 mol% based on 100 mol% of the total metal excluding lithium in the positive electrode active material.

### Example 3

A positive electrode active material and a coin-type half-cell were made in the same manner as in Example 1 except that the amount of boron of the boronic acid was changed to 1.0 mol% based on 100 mol% of the total metal excluding lithium in the positive electrode active material.

### Example 4

### 1. Preparation of Positive Electrode Active Material

Ni_{0.75}Mn_{0.23}Al_{0.02}(OH)₂ with an average particle diameter (D₅₀) of about 14 µm and LiOH were mixed in a molar ratio of 1:1 and were subjected to first heat treatment at 800 °C for 15 hours under an oxygen atmosphere to thereby prepare core particles containing lithium nickel-based composite oxide having a composition of LiNi_{0.75}Mn_{0.23}Al_{0.02}O₂ in the form of secondary particles with an average particle diameter (D₅₀) of about 14 µm.

Two tons of the core particles were poured with two tons of distilled water into a 10000 L mixer (Lödige) and then stirred for 5 minutes to prepare a first mixed solution. Subsequently, the first mixed solution was filter-pressed to remove the water until the water was reduced to 10 wt% based on 100 wt% of a total of the core particles and the water to thereby obtain a washed product.

A second mixed solution was prepared by adding distilled water, aluminum nitrate hydrate (Al(NO₃)₃-9H₂O), and boronic acid (H₃BO₃) to a 20 L reactor and then stirring the mixture for 30 minutes. The distilled water was added in an amount of 5 wt% based on total 100 wt% of a finally prepared positive electrode active material, the aluminum nitrate hydrate was added so that an aluminum amount was 0.2 mol% based on 100 mol% of a total metal excluding lithium in the finally prepared positive electrode active material, and the boronic acid was added so that a boron amount was 0.25 mol% based on 100 mol% of the total metal excluding lithium in the finally prepared positive electrode active material.

The washed product was added to the mixer (Lödige) while running the mixer at 5 RPM and starting to increase the mixer temperature at 2.5 °C/min, the second mixed solution was sprayed inside the mixer within a temperature range of about 60°C for 7 minutes. After stopping the spraying, the temperature was continuously increased to 380 °C to simultaneously perform a heat treatment (drying and coating) for 5 hours in total to thereby obtain the positive electrode active material.

Thereafter, a coin-type half-cell was made in the same manner as in Example 1.

### Example 5

A positive electrode active material and a coin-type half-cell were made in the same manner as in Example 4 except that the boron amount of the boronic acid was changed to 0.5 mol% based on 100 mol% of the total metal excluding lithium in the finally prepared positive electrode active material.

### Example 6

A positive electrode active material and a coin-type half-cell were made in the same manner as in Example 4 except that the boron amount of the boronic acid was changed to 0.75 mol% based on 100 mol% of the total metal excluding lithium in the finally prepared positive electrode active material.

### Example 7

A positive electrode active material and a coin-type half-cell were made in the same manner as in Example 4 except that the boron amount of the boronic acid was changed to 1.0 mol% based on 100 mol% of the total metal excluding lithium in the finally prepared positive electrode active material.

### Example 8

### 1. Preparation of Positive Electrode Active Material

Ni_{0.75}Mn_{0.23}Al_{0.02}(OH)₂ with an average particle diameter (D₅₀) of about 4 µm and LiOH were mixed in a molar ratio of 1:1 and were subjected to first heat treatment at 900 °C for 8 hours under an oxygen atmosphere to thereby prepare a lithium nickel-based composite oxide having a composition of LiNi_{0.75}Mn_{0.23}Al_{0.02}O₂. The lithium nickel-based composite oxide was pulverized with an Air-Jet to prepare core particles containing the lithium nickel-based composite oxide in the form of single particles with an average particle diameter (D₅₀) of about 4 µm.

Two tons of the core particles were added with two tons of distilled water to a 10000 L mixer (Lödige) and then stirred for 5 minutes to prepare a first mixed solution. Subsequently, the first mixed solution was filter-pressed until the distilled water was reduced to 10 wt% based on 100 wt% of a total of the core particles and the washing water and thereby obtain a washed product.

A second mixed solution was prepared by adding distilled water, aluminum nitrate hydrate (Al(NO₃)₃-9H₂O), and boronic acid (H₃BO₃) to a 20 L reactor and stirring the mixture for 30 minutes. Herein, the distilled water was added in an amount of 5 wt% based on total 100 wt% of a finally prepared positive electrode active material, the aluminum nitrate hydrate was added so that an aluminum amount was 0.2 mol% based on 100 mol% of the total metal excluding lithium in the finally prepared positive electrode active material, and the boronic acid was added so that a boron amount was 0.2 mol% based on 100 mol% of the total metal excluding lithium in the finally prepared positive electrode active material.

After putting the washed product into the mixer (Lödige), while mixing the mixture at 5 RPM and starting to increase the mixer temperature at 2.5 °C/min, the second mixed solution was sprayed inside the mixer within a temperature range of about 60°C for 7 minutes. After stopping the spraying, the temperature was continuously increased to 380 °C to perform a heat treatment (drying and coating) simultaneously for 5 hours in total and thereby prepare the positive electrode active material.

Thereafter, a coin-type half-cell was made in the same manner as in Example 1.

### Example 9

A positive electrode active material and a coin-type half-cell were made in the same manner as in Example 8 except that the boron content of the boronic acid was changed to 0.3 mol% based on 100 mol% of the total metal excluding lithium in the finally prepared positive electrode active material.

### Example 10

A positive electrode active material and a coin-type half-cell were made in the same manner as in Example 8 except that the boron content of the boronic acid was changed to 0.4 mol% based on 100 mol% of the total metal excluding lithium in the finally prepared positive electrode active material.

### Example 11

### 1. Preparation of Positive Electrode Active Material

Ni_{0.75}Mn_{0.23}Al_{0.02}(OH)₂ with an average particle diameter (D₅₀) of about 14 µm and LiOH were mixed in a molar ratio of 1:1 and were subjected to first heat treatment at 800 °C for 15 hours under an oxygen atmosphere to thereby prepare core particles containing lithium nickel-based composite oxide having a composition of LiNi_{0.75}Mn_{0.23}Al_{0.02}O₂ in the form of secondary particles with an average particle diameter (D₅₀) of about 14 µm.

Two tons of the core particles were added with two tons of distilled water to a 10000 L mixer (Lödige) and then stirred for 5 minutes to prepare a first mixed solution. Subsequently, the first mixed solution was press-filtered until the water was reduced to 10 wt% based on 100 wt% of a total of the core particles and the washing water, obtaining a washed product.

A second mixed solution was prepared by adding water, aluminum nitrate hydrate (Al(NO₃)₃-9H₂O), and ammonium metatungstate hydrate (H₂₆N₆O₄₀W₁₂-H₂O) to a 20 L reactor and stirring the mixture for about 30 minutes. Herein, the water was added in an amount of 5 wt% based on total 100 wt% of the finally prepared positive electrode active material, the aluminum nitrate hydrate was added so that an aluminum amount was 0.2 mol% based on 100 mol% of the total metal excluding lithium in the finally prepared positive electrode active material, and the ammonium metatungstate hydrate was added so that a tungsten amount was 0.025 mol% based on 100 mol% of the total metal excluding lithium in the finally prepared positive electrode active material.

After putting the washed product into the mixer (Lödige), while mixing the washed product at 5 RPM and starting to increase the mixer temperature at 2.5 °C/min, the second mixed solution was sprayed inside the mixer within a temperature range of about 60°C for 7 minutes. After stopping the spraying, the temperature was continuously increased to 380 °C to perform a heat treatment (drying and coating) simultaneously for 5 hours in total to thereby prepare the positive electrode active material.

Thereafter, a coin-type half-cell was made in the same manner as in Example 1.

### Example 12

A positive electrode active material and a coin-type half-cell were made in the same manner as in Example 11 except that the tungsten content of the ammonium metatungstate hydrate was changed to 0.05 mol% based on 100 mol% of the total metal excluding lithium in the finally prepared positive electrode active material.

### Example 13

A positive electrode active material and a coin-type half-cell were made in the same manner as in Example 11 except that the tungsten content of the ammonium metatungstate hydrate was changed to 0.1 mol% based on 100 mol% of the total metal excluding lithium in the finally prepared positive electrode active material.

### Example 14

A positive electrode active material and a coin-type half-cell were made in the same manner as in Example 11 except that the tungsten content of the ammonium metatungstate hydrate was changed to 0.15 mol% based on 100 mol% of the total metal excluding lithium in the finally prepared positive electrode active material.

### Example 15

### 1. Preparation of Positive Electrode Active Material

Ni_{0.75}Mn_{0.245}Al_{0.005}(OH)₂ with an average particle diameter (D₅₀) of about 4 µm and LiOH were mixed in a molar ratio of 1:1 and were subjected to first heat treatment at 900 °C for 8 hours under an oxygen atmosphere to thereby prepare core particles containing lithium nickel-based composite oxide having a composition of LiNi_{0.75}Mn_{0.245}Al_{0.005}O₂. The lithium nickel-based composite oxide was pulverized by using Air-Jet to prepare core particles containing lithium nickel-based composite oxide in the form of single particles with an average particle diameter (D₅₀) of about 4 µm.

Two tons of the core particles were added with two tons of distilled water to a 10000 L mixer (Lödige) and then, stirred for 5 minutes, preparing a first mixed solution. Subsequently, the first mixed solution was press-filtered until the water was reduced to 10 wt% based on 100 wt% of a total of the core particles and the water to thereby obtain a washed product.

A second mixed solution was prepared by adding distilled water, aluminum nitrate hydrate (Al(NO₃)₃-9H₂O), and ammonium metatungstate hydrate (H₂₆N₆O₄₀W₁₂-H₂O) to a 20 L reactor and stirring for about 30 minutes. Herein, the distilled water was added in an amount of 5 wt% based on 100 wt% of a finally prepared entire positive electrode active material, the aluminum nitrate hydrate was added so that an amount of the aluminum was 0.3 mol% based on 100 mol% of the total metal excluding lithium in the finally prepared positive electrode active material. The ammonium metatungstate hydrate was added so that a tungsten amount was 0.01 mol% based on 100 mol% of the total metal excluding lithium in the finally prepared positive electrode active material.

After putting the washed product into the mixer (Lödige) while mixing at 5 RPM and starting to increase the mixer temperature at 2.5 °C/min, the second mixed solution was sprayed inside the mixer within a temperature range of about 60 °C for 7 minutes. After stopping the spraying, the temperature was continuously increased to 380 °C to perform a heat treatment (drying and coating) simultaneously for 5 hours in total to prepare the positive electrode active material.

Thereafter, a coin-type half-cell was made in the same manner as in Example 1.

### Example 16

A positive electrode active material and a coin-type half-cell were made in the same manner as in Example 15 except that the amount of tungsten in the ammonium metatungstate hydrate was changed to 0.02 mol% based on 100 mol% of the total metal excluding lithium in the finally prepared positive electrode active material.

### Example 17

A positive electrode active material and a coin-type half-cell were made in the same manner as in Example 15 except that the amount of tungsten in the ammonium metatungstate hydrate was changed to 0.03 mol% based on 100 mol% of the total metal excluding lithium in the finally prepared positive electrode active material.

### Example 18

A positive electrode active material and a coin-type half-cell were made in the same manner as in Example 15 except that the amount of tungsten in the ammonium metatungstate hydrate was changed to 0.04 mol% based on 100 mol% of the total metal excluding lithium in the finally prepared positive electrode active material.

### Example 19

A positive electrode active material and a coin-type half-cell were made in the same manner as in Example 15 except that the amount of tungsten in the ammonium metatungstate hydrate was changed to 0.05 mol% based on 100 mol% of the total metal excluding lithium in the finally prepared positive electrode active material.

### Comparative Example 1

### 1. Preparation of Positive Electrode Active Material

The same washed product as that of Example 1 was added to a mixer and then mixed at 5 RPM, dried for 5 hours in total by increasing the mixture temperature to 380 °C to obtain a dried product.

The dried product was mixed with aluminum oxide (Al₂O₃) and was subjected to second heat treatment at 400 °C for 8 hours under an oxygen atmosphere to prepare a positive electrode active material. The aluminum oxide was added so that an amount of aluminum was 0.1 mol% based on 100 mol% of a total metal excluding lithium in the finally prepared positive electrode active material.

### 2. Manufacturing of Coin-type Half-cell

A coin-type half-cell was made in the same manner as in Example 1 except that the positive electrode active material of Comparative Example 1 was used.

### Comparative Example 2

A positive electrode active material and a coin-type half-cell were made in the same manner as in Comparative Example 1 except that the amount of aluminum in the aluminum oxide was changed to 0.2 mol% based on 100 mol% of the total metal excluding lithium in the positive electrode active material.

### Comparative Example 3

A positive electrode active material and a coin-type half-cell were made in the same manner as in Comparative Example 1 except that the amount of aluminum in the aluminum oxide was changed to 0.3 mol% based on 100 mol% of a total metal excluding lithium in the positive electrode active material.

### Comparative Example 4

A positive electrode active material and a coin-type half-cell were made in the same manner as in Comparative Example 1 except that the amount of aluminum in the aluminum oxide was changed to 0.5 mol% based on 100 mol% of a total metal excluding lithium in the positive electrode active material.

### Comparative Example 5

### 1. Preparation of Positive Electrode Active Material

A coating solution was prepared by adding aluminum nitrate hydrate and 600 g of distilled water to a 1 L reactor and stirring the mixture at about 350 rpm for about 5 minutes for salt dissolution. The coating solution, in which salts were completely dissolved, was confirmed to be colorless and transparent. While continuously stirring the coating solution, 500 g of the dried product of the Comparative Example 1 was added thereto for 1.5 minutes and then stirred for about 30 minutes. The aluminum nitrate hydrate was added so that an amount of aluminum was designed to be 0.2 mol% based on 100 wt% of the total metal excluding lithium in the finally prepared positive electrode active material.

After removing the solvent from the mixed solution by using an aspirator and a filter press, vacuum-drying was performed at 190 °C to obtain a coated product.

The coated product was subjected to a second heat treatment at 750 °C for 8 hours under an oxygen atmosphere to prepare a positive electrode active material.

### 2. Manufacturing of Coin-type Half-cell

A coin-type half-cell was made in the same manner as in Example 1 except that the positive electrode active material of Comparative Example 5 was used to make a positive electrode.

### Comparative Example 6

A positive electrode active material and a coin-type half-cell were made in the same manner as in Example 1 except that the positive electrode active material was prepared by not adding the boronic acid, and the second mixed solution was not sprayed inside the mixer but added into the mixer and then the mixer temperature was increased to 450 °C rather than 380 °C to perform the drying and coating simultaneously.

### Comparative Example 7

### 1. Preparation of Positive Electrode Active Material

The same washed product as that of Example 4 was added and then stirring at 5 RPM, dried for 5 hours in total by increasing the temperature to 380 °C, to thereby make a dried product.

The dried product was mixed with aluminum oxide (Al₂O₃) and was subjected to second heat treatment at 400 °C for 8 hours under an oxygen atmosphere to thereby prepare a positive electrode active material. The aluminum oxide was added so that an amount of aluminum was 0.5 mol% based on 100 mol% of the total metal excluding lithium in the finally prepared positive electrode active material.

### 2. Manufacturing of Coin-type Half-cell

A coin-type half-cell was made in the same manner as in Example 1 except that the positive electrode active material of Comparative Example 7 was used to make a positive electrode.

### Comparative Example 8

### 1. Preparation of Positive Electrode Active Material

A coating solution was prepared by adding aluminum nitrate hydrate and 600 g of distilled water to a 1 L reactor and then stirring the mixture at about 350 rpm for about 5 minutes for salt dissolution. The coating solution, in which salts were completely dissolved, was confirmed to be colorless and transparent. 500 g of the same dried product as that of Comparative Example 7 was added to the coating solution while continuously stirring for 1.5 minutes and then stirred for about 30 minutes. The aluminum nitrate hydrate was added so that an aluminum amount was designed to be 0.2 mol% based on 100 wt% of the total metal excluding lithium in the finally prepared positive electrode active material.

After removing the solvent from the mixed solution by using an aspirator and a filter press, vacuum-drying was performed at 190 °C to obtain a coated product.

The coated product was subjected to a secondary heat treatment at 750 °C for 8 hours under an oxygen atmosphere to prepare a positive electrode active material.

### 2. Manufacturing of Coin-type Half-cell

A coin-type half-cell was made in the same manner as in Example 1 except that the Comparative Example 8 positive electrode active material was used to make a positive electrode.

### Comparative Example 9

A positive electrode active material and a coin-type half-cell were made in the same manner as in Comparative Example 8 except that the amount of aluminum of the aluminum nitrate hydrate was changed to 1.0 mol% based on 100 mol% of a total metal excluding lithium in the finally prepared positive electrode active material.

### Comparative Example 10

A positive electrode active material and a coin-type half-cell were made in the same manner as in Example 4 except that the positive electrode active material was prepared by not adding the boronic acid, and the drying and coating were simultaneously performed by not spraying the second mixed solution inside the mixer but adding the second mixed solution to the mixer and increasing the mixer temperature to 450 °C rather than 380 °C.

### Comparative Example 11

### 1. Preparation of Positive Electrode Active Material

The same washed product as that of Example 8 was added to a mixer, and then, while mixing at 5 RPM, dried for 5 hours in total by increasing the mixture temperature to 380 °C to thereby obtain a dried product.

The dried product was mixed with aluminum oxide (Al₂O₃) and was subjected to second heat treatment at 400 °C for 8 hours under an oxygen atmosphere to thereby prepare a positive electrode active material. The aluminum oxide was added so that an amount of aluminum was 0.4 mol% based on 100 mol% of the total metal excluding lithium in a finally prepared positive electrode active material.

### 2. Manufacturing of Coin-type Half-cell

A coin-type half-cell was made in the same manner as in Example 1 except that the positive electrode active material of Comparative Example 11 was used to make a positive electrode.

### Comparative Example 12

### 1. Preparation of Positive Electrode Active Material

A coating solution was prepared by adding aluminum nitrate hydrate and 600 g of distilled water to a 1 L reactor and stirring the mixture at about 350 rpm for about 5 minutes for salt dissolution. The coating solution in which salts were completely dissolved was confirmed to be colorless and transparent. 500 g of the same dried product of Comparative Example 11 was added to the coating solution while stirring for 1.5 minutes and then stirred for about 30 minutes. Herein, the aluminum nitrate hydrate was added so that an amount of aluminum was 0.2 mol% based on 100 wt% of the total metal excluding lithium in the finally prepared positive electrode active material.

After removing the solvent from the mixed solution by using an aspirator and a filter press, vacuum-drying was performed at 190 °C, to thereby obtain a coated product.

The coated product was subjected to second heat treatment at 750 °C for 8 hours under an oxygen atmosphere to prepare the positive electrode active material.

### 2. Manufacturing of Coin-type Half-cell

A coin-type half-cell was made in the same manner as in Example 1 except that the positive electrode active material of Comparative Example 12 was used to make a positive electrode.

### Comparative Example 13

A positive electrode active material and a coin-type half-cell were made in the same manner as in Comparative Example 12 except that the amount of aluminum of the aluminum nitrate hydrate was 0.3 mol% based on 100 wt% of the total metal excluding lithium in the positive electrode active material.

### Comparative Example 14

A positive electrode active material and a coin-type half-cell were made in the same manner as in Example 8 except that the positive electrode active material was prepared by not adding the boronic acid and by not spraying the second mixed solution inside the mixer but adding the second mixed solution to the mixer and increasing the mixer temperature to 450 °C rather than 380 °C to simultaneously perform the drying and coating.

The aluminum content of the aluminum raw material, the tungsten content of the tungsten raw material, and the boron content of the boron raw material used to prepare the positive electrode active materials of the examples and the comparative examples are shown in Table 1 below.

### Evaluation 1: Initial Charge/Discharge Capacity and Efficiency

The rechargeable lithium battery cells according to the examples and the comparative examples were charged to an upper limit voltage of 4.55 V at a constant current of 0.2 C and to 0.05 C at the constant voltage and then discharged to a cut-off voltage of 3.0 V at the 0.2 C at 25 °C for initial charge and discharge. In Table 1 below, initial charge capacity, initial discharge capacity, and a ratio of the latter to the former as efficiency are shown.

### Evaluation 2: -20 °C Capacity

The rechargeable lithium battery cells of the examples and the comparative examples were charged to an upper limit voltage of 4.25 V at a constant current of 0.2 C and to 0.05 C at the constant voltage and discharged to cut-off voltage of 3.0 V at the 0.2 C at 25 °C for initial charge and discharge. In addition, the cells were charged to the upper limit voltage of 4.25 V at the constant current of 0.2 C and to 0.05 C at the constant voltage at 25 °C and then discharged to a cut-off voltage of 3.0 V at the 0.2 C at -20 °C to measure discharge capacity, which is shown in Table 1 below.

### Evaluation 3: High-temperature Cycle-life

After the initial charge/discharge of Evaluation 1, the cells were repeatedly charged and discharged 50 times or more at 1.0 C within a voltage range of 3.0 V to 4.55 V at 45 °C to calculate a ratio of 50^{th} cycle discharge capacity to the initial discharge capacity, and the results are shown in Table 1 below.

### Evaluation 4: Capacity Recovery Rate

The rechargeable lithium battery cells of the examples and the comparative examples were once charged and discharged at 0.3 C to measure discharge capacity. Subsequently, the obtained battery cells were stored at a high temperature (45 °C) for 7 days and once charged and discharged at the 0.3 C to measure discharge capacity. A ratio of the discharge capacity after stored for 7 days to the discharge capacity before stored at the high temperature was calculated. The results are shown as a capacity recovery rate in Table 1.

### Evaluation 5: Energy Density

The rechargeable lithium battery cells of the examples and the comparative examples were charged and discharged at a rate of 0.2 C/0.2 C within a voltage range of 3.0 V to 4.45 V at 25 °C to calculate energy density, which is shown in Table 1. The energy density was calculated according to an equation of {(average driving voltage (V) x capacity (Ah))/cell weight (kg)}, wherein the capacity was obtained by multiplying a positive electrode volume (cc) with discharge specific capacity (Ah/cc).

**Table 1**

| | Al (mol %) | B (mol %) | W (mol% ) | Initial charg e capac ity (mAh/ g) | Initial disch arge capac ity (mAh/ 9) | Effic ienc y (%) | -20°C Disc harg e capa city (mAh /g) | Cycl e-life (%) | Cap acity reco very rate (%) | Ene rgy den sity (Wh /kg) |
|---|---|---|---|---|---|---|---|---|---|---|
| Ex. 1 | 0.3 | 0.25 | - | 243.3 | 214.8 | 88.3 | 170 | 98.2 | 83.4 | 784 |
| Ex. 2 | 0.3 | 0.5 | - | 243.1 | 215.4 | 88.6 | 172 | 98.5 | 83.5 | 786 |
| Ex. 3 | 0.3 | 1.0 | - | 243.2 | 215.2 | 88.5 | 173 | 98.4 | 83.6 | 786 |
| Ex. 4 | 0.2 | 0.25 | - | 231.8 | 198.0 | 85.4 | 124 | 89.4 | 82.9 | 752 |
| Ex. 5 | 0.2 | 0.5 | - | 231.9 | 199.9 | 86.2 | 128 | 90.9 | 84.1 | 760 |
| Ex. 6 | 0.2 | 0.75 | - | 232.1 | 201.2 | 86.7 | 131 | 92.0 | 85.3 | 765 |
| Ex. 7 | 0.2 | 1.0 | - | 232.2 | 199.9 | 86.1 | 132 | 91.5 | 85.0 | 760 |
| Ex. 8 | 0.2 | 0.2 | - | 231.9 | 200.5 | 86.5 | 127 | 89.5 | 90.5 | 760 |
| Ex. 9 | 0.2 | 0.3 | - | 232.9 | 202.5 | 86.9 | 131 | 90.9 | 91.2 | 767 |
| Ex. 10 | 0.2 | 0.4 | - | 231.4 | 199.8 | 86.3 | 121 | 90.3 | 90.6 | 757 |
| Ex. 11 | 0.2 | - | 0.025 | 232.3 | 201.4 | 86.7 | 126 | 91.6 | 84.8 | 763 |
| Ex. 12 | 0.2 | - | 0.05 | 232.9 | 204.0 | 87.6 | 128 | 93.1 | 85.9 | 773 |
| Ex. 13 | 0.2 | - | 0.1 | 232.4 | 202.9 | 87.3 | 126 | 92.4 | 85.6 | 769 |
| Ex. 14 | 0.2 | - | 0.15 | 231.5 | 201.2 | 86.9 | 123 | 91.6 | 85.4 | 762 |
| Ex. 15 | 0.3 | - | 0.01 | 231.8 | 200.5 | 86.5 | 124 | 88.9 | 86.2 | 760 |
| Ex. 16 | 0.3 | - | 0.02 | 232.1 | 202.9 | 87.4 | 130 | 91.3 | 86.4 | 769 |
| Ex. 17 | 0.3 | - | 0.03 | 232.4 | 206.1 | 88.7 | 135 | 92.5 | 87.4 | 781 |
| Ex. 18 | 0.3 | - | 0.04 | 232.3 | 205.4 | 88.4 | 134 | 92.3 | 87.3 | 778 |
| Ex. 19 | 0.3 | - | 0.05 | 232.0 | 204.9 | 88.3 | 134 | 92.0 | 87.2 | 776 |
| Comp. Ex. 1 | 0.1 | - | - | 245.2 | 209.2 | 85.3 | 150 | 85.0 | 62.0 | 766 |
| Comp. Ex. 2 | 0.2 | - | - | 244.7 | 208.2 | 85.1 | 149 | 84.8 | 62.3 | 760 |
| Comp. Ex. 3 | 0.3 | - | - | 244.3 | 207.4 | 84.9 | 145 | 84.5 | 62.4 | 751 |
| Comp. Ex. 4 | 0.5 | - | - | 243.6 | 205.8 | 84.5 | 140 | 84.1 | 61.9 | 743 |
| Comp. Ex. 5 | 0.2 | - | - | 243.1 | 208.3 | 85.7 | 153 | 93.1 | 70.4 | 752 |
| Comp. Ex. 6 | 0.3 | - | - | 243.9 | 209.3 | 85.8 | 154 | 90.6 | 74.3 | 755 |
| Comp. Ex. 7 | 0.5 | - | - | 229.7 | 195.6 | 85.2 | 115 | 75.1 | 75.0 | 741 |
| Comp. Ex. 8 | 0.2 | - | - | 229.6 | 194.5 | 84.9 | 117 | 85.2 | 80.9 | 739 |
| Comp. Ex. 9 | 1.0 | - | - | 229.1 | 195.2 | 85.2 | 114 | 80.9 | 81.2 | 740 |
| Comp. Ex. 10 | 0.2 | - | - | 228.9 | 192.1 | 83.9 | 105 | 83.2 | 72.2 | 741 |
| Comp. Ex. 11 | 0.4 | - | - | 230.5 | 196.5 | 85.2 | 120 | 81.2 | 83.2 | 745 |
| Comp. Ex. 12 | 0.2 | - | - | 230.9 | 196.9 | 85.3 | 119 | 83.2 | 85.1 | 746 |
| Comp. Ex. 13 | 0.3 | - | - | 230.5 | 196.2 | 85.1 | 117 | 84.1 | 85.5 | 743 |
| Comp. Ex. 14 | 0.2 | - | - | 230.7 | 197.0 | 85.4 | 115 | 85.4 | 82.3 | 748 |

Referring to Table 1, Examples 1 to 3, whose aluminum and boron coating layers were formed by spraying aluminum and boron while running a mixer by using aluminum nitrate hydrate and boronic acid, exhibited excellent initial charge/discharge capacity, efficiency, capacity recovery rate, and cycle-life characteristics as compared to Comparative Examples 1 to 4, whose aluminum coating layers was dry-coated on the washed product, Comparative Example 5, whose aluminum coating layer was formed through wet-coating on the washed product but through separate drying and secondary heat treatment, and Comparative Example 6, in which the drying and the coating were performed at higher temperatures.

Examples 4 to 7, whose aluminum and boron coating layers were formed by spraying aluminum and boron while running a mixer after performing a washing process by using aluminum nitrate hydrate and boronic acid, exhibited excellent initial charge/discharge capacity, efficiency, capacity recovery rate, and cycle-life characteristics, as compared to Comparative Example 7, whose aluminum coating layer was formed through dry coating on a washed product, Comparative Examples 8 and 9, whose aluminum coating layers were formed through wet coating on a washed product but through separate drying and performing second heat treatment, and Comparative Example 10, in which the drying and coating were performed at higher temperatures.

Examples 8 to 10, whose aluminum and boron coating layers were formed through spraying aluminum and boron by using aluminum nitrate hydrate and boronic acid, exhibited excellent initial charge/discharge capacity, efficiency, capacity recovery rate, and cycle-life characteristics, as compared to Comparative Example 11, whose aluminum coating layer was formed through dry coating, Comparative Examples 12 and 13 whose aluminum coating layers were formed through wet coating, and Comparative Example 14 in which the drying and coating were performed at higher temperatures.

Examples 11 to 14, whose aluminum and tungsten coating layers were formed by spraying after a washing process while running a mixer by using aluminum nitrate hydrate and ammonium metatungstate hydrate, were confirmed to exhibit excellent initial charge/discharge capacity, efficiency, capacity recovery rate, cycle-life characteristics, and energy density, as compared to Comparative Example 7, whose aluminum coating layer was formed through dry-coating on a washed product, Comparative Examples 8 and 9, whose aluminum coating layers were formed through wet-coating on a washed product but through separate drying and performing second heat treatment, and Comparative Example 10, in which the drying and coating were performed at higher temperatures.

Examples 15 to 19, whose aluminum and tungsten coating layers were formed by using aluminum nitrate hydrate and ammonium metatungstate hydrate to spray aluminum and tungsten, exhibited excellent initial charge/discharge capacity, efficiency, capacity recovery rate, cycle-life characteristics, and energy density, as compared to Comparative Example 11, whose aluminum coating layer was formed through dry coating, Comparative Examples 12 and 13, whose aluminum coating layers were formed through wet coating, and Comparative Example 14, in which the drying and coating were performed at higher temperatures.

While this disclosure has been described in connection with what is presently considered to be practical example embodiments, it is to be understood that the disclosure is not limited to the disclosed embodiments. On the contrary, the disclosure includes various modifications and equivalent arrangements.

## Claims

1. A method of preparing a positive electrode active material, the method comprising:
(i) preparing core particles comprising a lithium nickel-based composite oxide;
(ii) mixing the core particles and water to wash the core particles;
(iii) removing a portion of the water so that the water is included in an amount of 1 wt% to 10 wt% based on a total 100 wt% of the core particles and water to thereby obtain a washed product;
(iv) adding and mixing an aluminum raw material and a metal raw material into an aqueous solvent to prepare a coating solution; and
(v) adding the washed product into a mixer and performing heat treatment at 300 °C to 400 °C while or after spraying the coating solution;
wherein the metal raw material is a boron raw material or a tungsten raw material.

2. The method as claimed in claim 1, wherein the lithium nickel-based composite oxide is represented by:
Liₐ₂Niₓ₂M³_{y2}M⁴_{z2}O_{2-b2}X_{b2}
where 0.9 ≤ a2 ≤ 1.8, 0.3 ≤ x2 ≤ 1, 0 ≤ y2 ≤ 0.7, 0 ≤ z2 ≤ 0.7, 0.9 ≤ x2+y2+z2 ≤ 1.1, and 0 ≤ b2 ≤ 0.1, M³ and M⁴ are each one or more of Al, B, Ba, Ca, Ce, Co, Cr, Cu, Fe, Mg, Mn, Mo, Nb, Si, Sn, Sr, Ti, V, W, Y, Zn, and Zr, M³ and M⁴ are different, and X is one or more of F, P, and S.

3. The method as claimed in claim 1 or claim 2, wherein an amount of nickel is greater than or equal to 60 mol% based on 100 mol% of a total metal excluding lithium in the lithium nickel-based composite oxide.

4. The method as claimed in any one of claims 1 to 3, wherein the core particles are in a form of secondary particles that are agglomerations of primary particles or in a form of single particles.

5. The method as claimed in claim 4, wherein an average particle diameter (D₅₀) of the secondary particles is 8 µm to 15 µm, and
wherein an average particle diameter (D₅₀) of the single particles is 2 µm to 5 µm.

6. The method as claimed in any one of claims 1 to 5, wherein, in the washing of the core particles, the core particles and the water are mixed in a weight ratio of core particles to water of 0.5:1 to 1:1.

7. The method as claimed in any one of claims 1 to 6, wherein an amount of aluminum of the aluminum raw material is 0.1 mol% to 1.0 mol% based on 100 mol% of a total metal excluding lithium in the core particles and aluminum of the aluminum raw material.

8. The method as claimed in any one of claims 1 to 7, wherein an amount of boron of the boron raw material is 0.1 mol% to 3.0 mol% based on 100 mol% of a total metal excluding lithium in the core particles and boron of the boron raw material.

9. The method as claimed in any one of claims 1 to 8, wherein the tungsten raw material comprises ammonium metatungstate hydrate (H₂₆N₆O₄₀W₁₂-H₂O).

10. The method as claimed in any one of claims 1 to 9, wherein a tungsten content of the tungsten raw material is 0.01 mol% to 0.5 mol% based on 100 mol% of the metal excluding lithium in the core particles and tungsten of the tungsten raw material.

11. The method as claimed in any one of claims 1 to 10, wherein the mixer is operated at a speed of less than or equal to 50 RPM.

12. The method as claimed in any one of claims 1 to 11, wherein the spraying of the coating solution is performed when the mixer starts to be heated, and
wherein the spraying the coating solution is performed at a temperature within the mixer of 20 °C to 80 °C, and
wherein the mixer is heated to 300 °C to 400 °C after spraying the coating solution.

13. The method as claimed in any one of claims 1 to 12, wherein the heat treatment is performed at a temperature of 350 °C to 390 °C.

14. A positive electrode active material prepared by the method as claimed in any one of claims 1 to 13.

15. A rechargeable lithium battery comprising:
a positive electrode comprising a positive electrode active material as claimed in claim 14;
a negative electrode; and
an electrolyte.
